# EUROPÄISCHE PATENTSCHRIFT

(11) **EP 0 626 569 B1**
(45) Veröffentlichungstag und Bekanntmachung des Hinweises auf die Patenterteilung: **07.01.1998**
(21) Anmeldenummer: 94105657.4
(22) Anmeldetag: 13.04.1994
(51) Int. Cl.: G01F 23/00

(54) **Verfahren zur Überwachung der Füllstände von Wertstoff-Sammelbehältern**
Method for level monitoring of the contents in containers
Procédé de surveillance de niveau du contenu dans des réservoirs

(30) Priorität: 22.05.1993 DE 4317419
(43) Veröffentlichungstag der Anmeldung: 30.11.1994
(73) Patentinhaber: AUCOTEAM Ingenieurgesellschaft für AUTOMATISIERUNGS- und COMPUTERTECHNIK mbH Berlin, D-10407 Berlin (DE)
(72) Erfinder: Mucha, Hans-Karl, D-14065 Berlin (DE); Schlüter, Michael, D-12277 Berlin (DE)

(56) Entgegenhaltungen:
- EP-A- 0 376 646
- EP-A- 0 476 738
- WO-A-84/03488
- FR-A- 2 645 621
- US-A- 3 981 195
- US-A- 4 194 177
- US-A- 5 023 806

## Beschreibung

Die Erfindung bezieht sich auf ein Verfahren zur Überwachung der Füllstände von Wertstoff-Sammelbehältern gemäß dem Oberbegriff des Anspruches 1.

Wertstoff-Sammelbehälter sind als spezielle Container für Glas/Flaschen, für Papier/Pappe, für Verpackungsmaterialien aus Kunststoffen, für Batterien od. dgl. in unterschiedlicher Konzentration in den Ortschaften aufgestellt, um eine Rohstoffrückgewinnung zu ermöglichen. Die Container werden in festgelegten Zeitabständen entleert. Dabei zeigt es sich, daß die Container abhängig vom Aufstellungsort und abhängig von der Jahreszeit entweder überfüllt oder nur teilweise gefüllt sind. In beiden Fällen ist es nachteilig, daß die Festlegung des Tourenplanes zur Entleerung der Container ohne Kenntnis über deren Füllstand erfolgt.

Es ist bereits bekannt, die Behälter für den Hausmüll mit einem batterielosen Transponder auszurüsten, um das Müllaufkommen eines Haushaltes für Abrechnungszwecke zu ermitteln. Mittels dieses Transponders wird eine Codenummer in den Bordcomputer des Müll fahrzeugs zur Identifikation des Haushaltes eingespeichert. Es wird jedoch keine Füllstandsmessung vorgenommen (Zeitschrift "Elektronik", H.26/1992).

Es sind auch bereits eine Vielzahl von Vorrichtungen und Verfahren zur Füllstandsmessung von Behältern bekannt.

In der DE 38 12 293 C2 wird zur kontinuierlichen Messung des Füllstandes eines Behälters über dem Füllgut im Behälter ein Füllstandsmessgerät angebracht, welches Schall- oder Ultraschallimpulse nach unten in den Behälter schickt und die an der Oberfläche des Füllguts reflektierten Echoimpulse empfängt. Der Zeitabstand zwischen der Aussendung eines Schall- oder Ultraschallimpulses und dem Empfang eines Echoimpulses entspricht der Schallaufzeit vom Füllstandsmeßgerät bis zur Füllgutoberfläche und wieder zurück zum Füllstandsmeßgerät. Bei bekannter Schallgeschwindigkeit kann daraus der Abstand der Füllgutoberfläche vom Füllstandsmeßgerät und somit der Füllstand im Behälter bestimmt werden.

In den DE 41 31 582 Al und EP 0 508 143 A2 werden kapazitive Füllstandsmeßeinrichtungen für Behälter, Bunker oder Silos vorgeschlagen, welche die Veränderung der Dielektrizitätskonstante bei der Füllung ausnutzen.

In der EP 0 520 954 Al wird eine optische Vorrichtung zur Füllstandserfassung von Tanks vorgeschlagen.

In der EP 0 449 023 Al wird eine Vorrichtung zur Feststellung und Überwachung eines vorbestimmten Füllstandes in einem Behälter mittels Sensoren und schwingungsmechanischen sowie elektromechanischen Mitteln vorgeschlagen.

Aus der DE 40 16 373 Al ist ein Verfahren zur Überwachung eines Kanalisationsnetzes bekannt, bei dem Meßdaten einzelner Meßpunkte im Netz erfaßt, aufgezeichnet und mittels einer Fernüberwachungs- bzw. - Abfrageeinrichtung weiterverarbeitet werden. Die hier zu erfassenden und zu verarbeitenden Daten bilden jedoch eine zur Anmeldung gattungsferne Problematik und können nicht zur Füllstandsüberwachung von Wertstoff-Sammelbehältern herangezogen werden.

Es ist insgesamt keine Füllstandsmessung bekannt, die für die Überwachung des Füllstandes von Wertstoff-Sammelbehältern in wirtschaftlicher Weise angewendet werden könnte.

Der Erfindung liegt von daher die Aufgabe zugrunde, ein Verfahren zur Füllstandsüberwachung von Wertstoff-Sammelbehältern zu entwickeln, das ein preiswertes Überwachen der Füllstände und eine effektive, wirtschaftliche Entleerung der Sammelbehälter gewährleistet.

Die Lösung dieser Aufgabe ergibt sich aus den kennzeichnenden Merkmalen des Anspruches 1.

Durch das Verfahren wird das rechtzeitige Erkennen kritischer Füllstände in den Sammelbehältern ermöglicht. Das Verfahren berücksichtigt den Behälter-Typ, die Art des Sammelgutes und die Behälteranzahl je Aufstellort. Für den Betrieb und die Installation sind keine straßenseitigen Baumaßnahmen und Anschlußarbeiten erforderlich, so daß langwierige Genehmigungsverfahren entfallen. Die Anwendung von Funkmodem-Systemen gewährleistet die wirtschaftliche und störungsfreie Übertragung der Daten der Sammelbehälter.

Durch die Erfassung der Füllstände der Wertstoff-Sammelbehälter und durch die Zuführung der Meßwerte an eine zentrale Erfassungs- und Auswertestelle bzw. durch die Fernabfrage der Füllstände aus einer zentralen Erfassungs- und Auswertestelle in bestimmten Intervallen oder automatisch wird eine wirtschaftliche Entleerung der Wertstoff-Sammelbehälter und gleichzeitig eine saubere Umgebung an den Aufstellungsorten dieser Behälter erreicht.

Die für die Füllstandsermittlung über ein Territorium aufgebaute Funk-Infrastruktur kann für weitere Aufgaben genutzt werden. Es könnten z.B. Klimadaten wie Temperatur, Luftfeuchtigkeit, Luftdruck übertragen und eine lokale Glättewarnung aufgebaut werden, die zur Einsatzplanung von Streufahrzeugen genutzt werden könnte. Durch den Einbau weiterer Sensoren in die Füllstandsmeßmodule ist es möglich, noch weitere Umweltdaten, beispielsweise Luftschadstoffe, zu messen, mit denen eine sich ständig aktualisierende Luftgüte- und Klimakarte erstellt werden kann.

Weitere vorteilhafte Ausgestaltungen der Erfindung ergeben sich aus den Unteransprüchen.

Die Erfindung ist nachfolgend anhand von in den Zeichnungen dargestellten Ausführungsbeispielen für das Verfahren zur Überwachung der Füllstände von Wertstoff-Sammelbehältern näher erläutert. Es zeigen:
- Fig. 1: die schematische Darstellung des Verfahrens zur Füllstandsüberwachung von Wertstoff-Sammelbehältern im Master-/Slave-Betrieb,
- Fig. 2: die schematische Darstellung der standsüberwachung von Wertstoff-Sammelbehältern mit lokaler Überwachungseinheit,
- Fig. 3: die schematische Darstellung der Füllstandsüberwachung von Wertstoff-Sammelbehältern mit Infrarotübertragung,
- Fig. 4: die schematische Darstellung der Füllstandsüberwachung nach dem Gewichtsverfahren,
- Fig. 5: die schematische Darstellung der Füllstandsüberwachung mit elektronischen Mitteln,
- Fig. 6: die schematische Darstellung der Füllstandsüberwachung nach Fig. 1 mit Doppellichtschranke,
- Fig. 7: die schematische Darstellung der Füllstandsüberwachung nach Fig. 1 mit Lichtschranken,
- Fig. 8: die schematische Darstellung der Füllstandsüberwachung nach Fig. 1 mit Ultraschall-Meßsystem,
- Fig. 9: die schematische Darstellung der Füllstandsüberwachung nach Fig. 1 mit akustischem Zähler und
- Fig.10: die schematische Darstellung der Füllstandsüberwachung nach Fig. 1 über eine Druckfolie.

Das Verfahren zur Überwachung der Füllstände von Wertstoff-Sammelbehältern ermöglicht es, von einer Einsatzzentrale aus, mittels einer Sensor- und Überwachungstechnik, kritische Füllstände rechtzeitig und automatisch zu erkennen. Mit Hilfe des Verfahrens kann eine Optimierung der Tourenplanung für die Entsorgungsfahrzeuge erfolgen. Die Füllstände aller an einem Standort aufgestellten Wertstoff-Sammelbehälter werden dazu beispielsweise stündlich erfaßt und zum lokalen Master über eine Kurzstreckenfunkverbindung hin übertragen. Die hier gesammelten und aufbereiteten Standortdaten eines Tages werden beispielsweise als Block einmal in 24 Stunden in der Nacht der Einsatzzentrale über ein Funkmodem mitgeteilt. Aus der historischen Entwicklung der Füllstände kann der Zeitpunkt prognostiziert werden, zu dem ein Behälter seinen optimalen Füllstand erreicht hat.

Die stündliche Erhebung der Füllstände gestattet es, genau festzustellen, wann ein Behälter geleert wurde, um daraus eine weitere Optimierung der Tourenplanung abzuleiten. Für jeden Behälter wird der wahrscheinliche Füllstand für den übernächsten Arbeitstag errechnet, so daß der am übernächsten Arbeitstag maximal gefüllte Behälter für den folgenden Arbeitstag auf die Liste der zu entleerenden Behälter gesetzt werden kann.

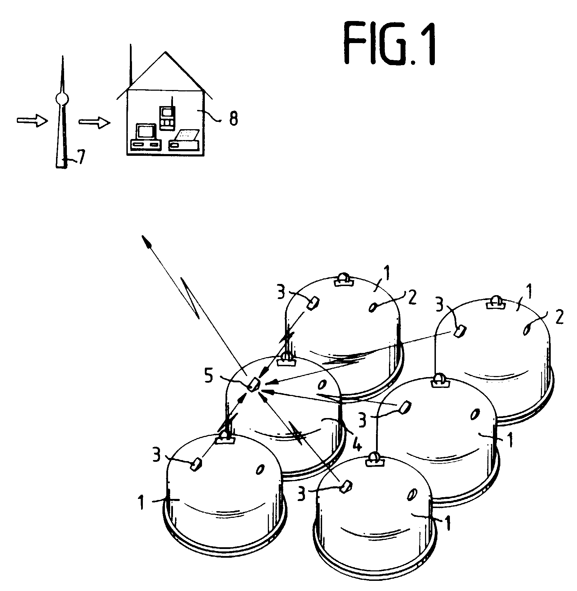

Die Fig. 1 zeigt mehrere Wertstoff-Sammelbehälter 1 in der allgemein bekannten Bauart mit jeweils einer Einfüllöffnung 2 und einem elektronischen Füllstandssensor mit einem Kurzstrecken-Funkmodul 3, die als Slave-Container ihre Füllstandsdaten an einen Wertstoff-Sammelbehälter 4 senden, der zum Master-Container bestimmt wurde und ein Funk-Modem 5 aufweist.

Die Füllstände jedes einzelnen Wertstoffsammelbehälters 1 werden tagsüber mehrmals gemessen und über die unidirektionale Kurzstrecken-Funkverbindung dem Master-Container 4 mitgeteilt. In einem nicht dargestellten nichtflüchtigen Speicher werden dort die Daten aller an einem Standort stehenden Behälter 1 gesammelt und für die Übertragung an die Einsatzzentrale 8 aufbereitet. Die mehrfache, tägliche Erhebung der Füllstände ermöglicht es, daß die Zeitpunkte des Erreichens der kritischen Füllhöhen mit hoher Wahrscheinlichkeit prognostiziert werden und damit rechtzeitig in eine Tourenplanung einfließen können. Die gesammelten Standortdaten eines Tages werden einmal als Block, aus Gründen kostengünstiger Tarife in der Nacht, vom Master-Container 4 über eine Funkzentrale 7 an die Einsatzzentrale 8 übertragen. Bei unvorhergesehenen Füllstandsentwicklungen wird automatisch die Datenübertragung auch tagsüber aktiviert, um Maßnahmen ergreifen zu können. Nach jeder Datenabfrage wird dem Master-Container 4 von der Einsatzzentrale 8 mitgeteilt, wann er sich wieder melden soll. Dadurch wird eine optimale Ausnutzung der Übertragungskapazitäten der Funkkanäle erreicht.

Zur Vermeidung von Kollisionen bei der Datenübertragung von den Slave- zu den Master-Containern 1,4, wird jedem Slave-Container 1 eine feste Sendezeit zugeordnet, zu der er sich selbständig melden muß. Die erforderlichen Genauigkeiten werden durch den Einsatz von Funkuhren als Bestandteil der Container-Elektronik erreicht. In der Einsatzzentrale 8 werden alle eingehenden Daten in einem Zentralrechner zur Tourenplanung o. dgl. weiterverarbeitet.

Die in den Wertstoff-Sammelbehältern 1,4 installierte Meß- und Senderelektronik ist für eine geringe Leistungsaufnahme ausgelegt. Die Energieversorgung ist durch Batterien bzw. Akkumulatoren mit Betriebszeiten von mindestens einem Jahr für die Master-Container 4 und von mindestens drei Jahren für die Slave-Container 1 gewährleistet. Mit einem Funkmodem können die Daten von ca. 500 Wertstoff-Sammelbehälter-Standplätzen mit ca. 2500 Wertstoff-Sammelbehältern 1 täglich abgerufen werden.

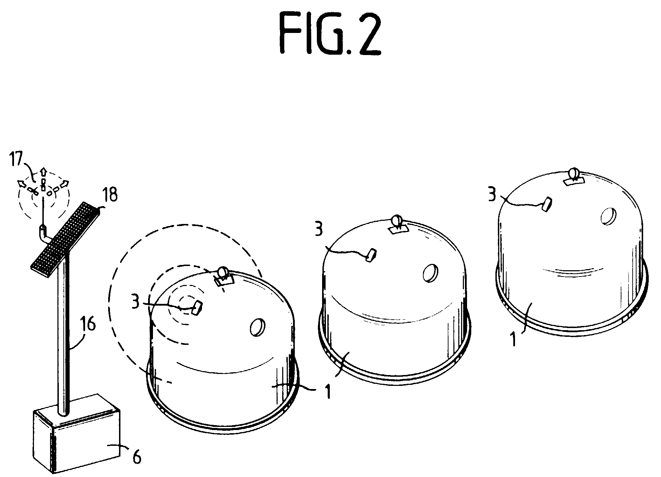

In der Fig. 2 ist eine weitere Ausführungsvariante des Verfahrens dargestellt. Die Wertstoff-Sammelbehälter 1 mit ihren Füllstandssensoren mit Kurzstrecken-Funkmodulen 3 übertragen die Füllstandsdaten auf eine lokale Überwachungseinheit 6. Die lokale Überwachungseinheit 6 wird aus einer nicht dargestellten Steuerungselektronik, aus einem Mast 16 mit einer für den Empfang der Füllstandsdaten von den Behältern 1 darin eingearbeiteten Antenne sowie aus einem Funkmodem 17 und aus einer Solar-Energieversorgung 18 gebildet. Das Funkmodem 17 ist mit modularen Treibern aufgebaut, welche die Kommunikation mit beliebigen Funkmodem ermöglichen. Infrage kommen die Modem für ein Bündelfunknetz, z.B. RegioKom, oder ein Funknetz, z.B. MODACOM. Von der lokalen Überwachungseinheit 6 erfolgt die Langstreckendatenübertragung zur Einsatzzentrale 8.

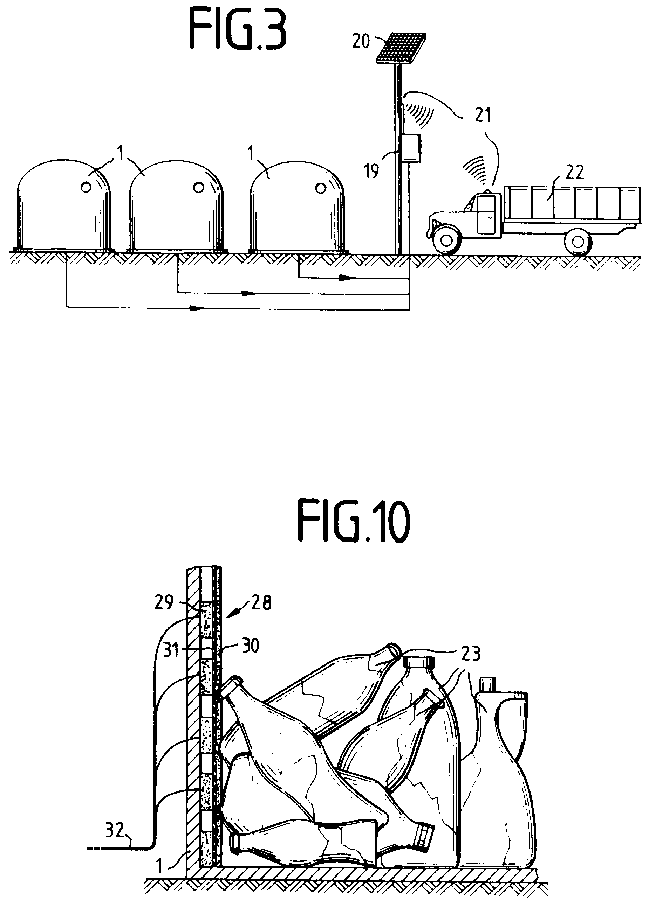

Die Fig. 3 zeigt eine weitere Möglichkeit der Füllstandsdaten-Übertragung. Von den Wertstoff-Sammelbehältern 1 werden die Füllstandsdaten an eine lokale Überwachungseinheit 19 übertragen. Die Energieversorgung des Systems erfolgt mittels eines Solarmoduls 20. Aus der lokalen Überwachungseinheit 19 können die Daten über eine Infrarot Infrarot-Datenübertragung 21 z.B. aus entsprechend ausgerüsteten Fahrzeugen 22 abgerufen werden. Die Daten werden dann in der Zentrale 8 als Datenträger übergeben.

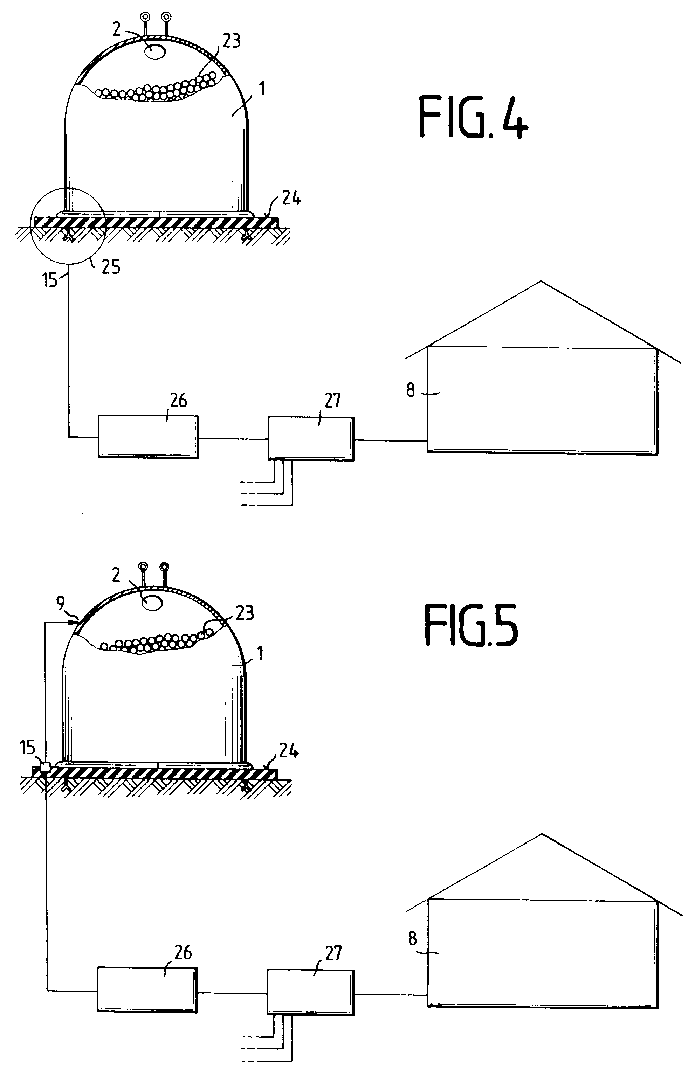

In der Fig. 4 ist ein Wertstoff-Sammelbehälter 1 mit der Einfüllöffnung 2 und dem Füllgut 23, z.B. Flaschen, dargestellt. Der Behälter 1 steht auf einem Untergestell 24, welches im Boden verankert ist und eine Gewichtsmeßeinrichtung 25 mit einer Datenschnittstelle 15 aufweist. Die Gewichtsmeßeinrichtung 25 besteht aus handelsüblichen Drucksensoren, z.B. piezoelektrischen oder pneumatischen Sensoren. Mit der Gewichtsmeßeinrichtung 25 ist die Datenschnittstelle 15 verbunden, über die eine Fernabfrage des Behältergewichts erfolgt. Die am Behälter 1 ermittelten Füllstandswerte werden nach einer entsprechenden Aufbereitung und Schwellwertbildung über das öffentliche Fernsprechnetz mittels Modem oder mittels eines Fernwirkdienstes, z.B. TEMEX der Deutschen Bundespost, über einen Fernwirk-Netzanschluß 26 und die Fernwirkzentrale 27 als Fernüberwachungsdienst an die Zentrale 8 des Entsorgungsunternehmens geleitet. Auch hier kann die Datenübertragung über den in den Fig.1 bis 3 beschriebenen Weg erfolgen. Die Korrelation zwischen Füllstand und Füllgewicht des Behälters 1 wird durch Versuche mit verschiedenen Materialien ermittelt. Im Untergestell 24 ist eine Kodierungseinrichtung für die unterschiedlichen Behälterbauformen zur automatischen Nullpunkteinstellung der Gewichtsmeßeinrichtung 25 eingebaut. Damit sind nur geringe Änderungen an bestehenden Behältern 1 erforderlich. In der Zentrale 8 erfolgt die Zusammenführung und Auswertung aller Behältermeßstellen zu einem Tourenplan für die Fahrzeuge.

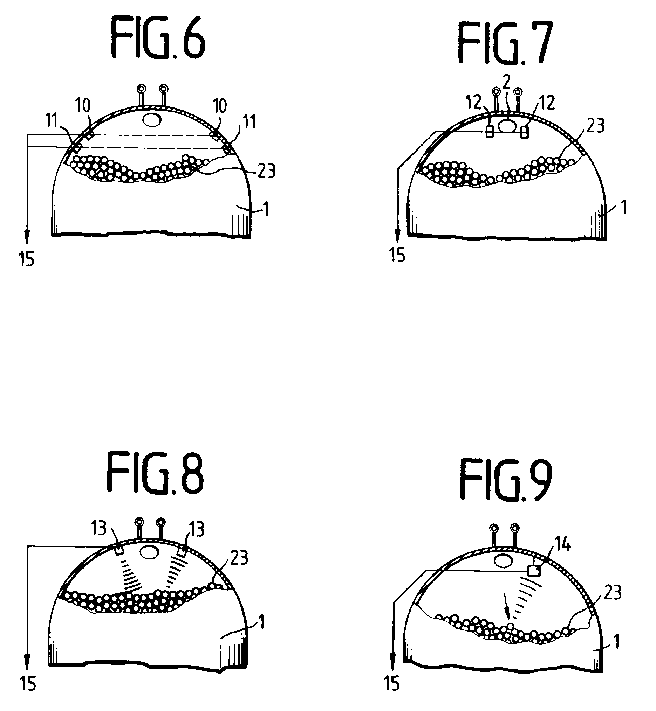

In der Fig. 5 ist das erfindungsgemäße Verfahren entsprechend der Darstellung in der Fig. 4 mit einer Abwandlung der Füllstandsmessung gezeigt. Das Untergestell 24 enthält hier keine Gewichtsmeßeinrichtung 25. Die Füllstandsmessung erfolgt über einen Sensor 9, dessen Daten an die Datenschnittstelle bzw. Sensorelektronik 15 gegeben werden und von dort nach entsprechender Aufbereitung über den Fernwirk-Netzanschluß 26 und die Fernwirkzentrale 27 an die Zentrale 8 des Entsorgungsunternehmens.

In den Fig. 6 bis 9 sind Varianten für den Sensor 9 in der Fig.5 für weitere Füllstandsmeßverfahren gezeigt. Die Meßwerte werden jeweils an die Sensorelektronik bzw. Datenschnittstelle 15 geführt und nach einer Aufbereitung in die Fernabfrage gegeben.

Nach der Darstellung in der Fig. 6 werden zur Füllstandsmessung zwei Lichtschranken 10,11 verwendet, die in einem definierten Abstand übereinander im Behälter 1 angeordnet sind. Die untere, zum Füllgut hin angeordnete Lichtschranke 11, dient der Ermittlung eines Füllstand-Schwellwertes. Damit besteht die Möglichkeit, rechtzeitig eine gesicherte Entleerungsplanung vorzunehmen, insbesondere dann, wenn historische Füllstandsentwicklungen in die Erfassung und Auswertung mit einbezogen werden.

Der Vorteil dieses Lichtschrankenverfahrens besteht darin, daß die Füllstandsermittlung sehr genau und ohne Umweg über das spezifische Gewicht des Füllgutes erfolgt.

In einer Einfachversion kann die untere Lichtschranke 11 entfallen.

Das Lichtschrankenverfahren läßt sich in der mit der Fig. 7 gezeigten Form modifizieren. Jeder Einfüllöffnung 2 am Behälter 1 wird eine Lichtschranke 12 zugeordnet, welche die Anzahl der Einwürfe feststellt. Der Zusammenhang zwischen der Anzahl von Einwürfen und dem Füllstand wird durch Versuche ermittelt.

Eine weitere Möglichkeit der Füllstandsmessung ist in der Fig. 8 dargestellt. Mittels eines einfachen akustischen Sende-/Empfängerbausteins 13 mit geringster Leistung wird die Veränderung der Resonanzfrequenz des verbleibenden Hohlraumes über dem Füllgut 23 in Abhängigkeit von der Füllhöhe ausgewertet.

Speziell bei Behältern 1 für Glas/Flaschen bietet sich eine Lösung nach Fig. 8 an, bei welcher der Sende-/Empfängerbaustein 13 aus einem elektronischen Ultraschall-Meßsystem mit Sender und Empfänger und mit einer Steuer- und Speichereinheit gebildet wird. Das Ultraschall-Meßsystem befindet sich an der höchsten Stelle im Behälterinnenraum. Die Füllstandshöhen werden aus der Laufzeit berechnet, die das Ultraschall-Signal vom Sender zur Oberfläche des Füllgutes 23 und zurück zum Empfänger benötigt. Je voller der Behälter ist, desto kürzer ist die Laufzeit. Der Schwellwert für die kritische Füllhöhe ist programmierbar. Die Elektronik kompensiert Meßfehler, die durch klimatische Einflüsse, aber auch durch Störungen, die durch unterschiedliches Reflexionsverhalten der Füllmaterialien und des Behälterinnenaufbaus entstehen können.

Die Lösungen nach den Fig. 7 und 8 haben gegenüber der Gewichtsmeßmethode den Vorteil, daß die Füllstände in Behältern 1 mit Kammern für unterschiedliche Stoffe, unabhängig voneinander festgestellt werden können.

Ebenfalls für Behälter 1 für Glas/Flaschen bietet sich eine Lösung nach Fig. 9 an. Der Füllstandssensor 14 enthält ein Mikrofon. Beim Einwurf eines Gegenstandes in den Behälter 1 wird das dabei entstehende markante Geräusch über das Mikrofon erfaßt, ausgewertet und einer Zählschaltung zugeführt. Auch hier muß durch Versuche der Zusammenhang zwischen der Anzahl der Einwürfe und der Füllhöhe experimentell ermittelt werden.

In der Fig. 10 ist die Füllstandsermittlung über eine Druckfolie 28 dargestellt. Die Druckfolie 28 besteht aus einer ersten und einer zweiten Kontaktfläche 29,30, die durch eine Isolierschicht 31 voneinander getrennt sind. Die Druckfolie 28 ist an der Behälterinnenwand aufgebracht. In definierten Abständen werden von der Druckfolie 28 Daten abgeleitet, die ein Maß für den Füllstand mit Füllgut 23 im Behälter 1 geben. Die Daten werden über Leitungen 32 einer nicht dargestellten Überwachungseinheit zur weiteren Behandlung entsprechend dem Vorbeschriebenen, z.B. über Kurzstrecken-Datenübertragung auf einen Master-Container und der Langstrecken-Datenübertragung über ein Funknetz, zugeleitet.

Die elektronischen Komponenten sind an den Behältern 1,4 robust und vandalismussicher für den rauhen Betrieb im Freien aufgebaut, z.B. versenkbare Antennen, kodierte, magnetische Verriegelung des Stromversorgungsmoduls. Ihr Einbau ist auch nachträglich in allen heute gebräuchlichen Behälterkonstruktionen möglich.

Das Verfahren zur Überwachung von Füllständen kann überall dort Anwendung finden, wo wirtschaftlich und zuverlässig über größere Entfernungen Daten erfaßt, übertragen und ausgewertet werden müssen, so z.B. auch bei Getränkeautomaten und zur Service-Steuerung.

## Patentansprüche

1. Verfahren zur Überwachung der Füllstände von Wertstoff-Sammelbehältern,
**dadurch gekennzeichnet,** daß die Füllstände der Wertstoff-Sammelbehälter (1) mittels eines elektronischen Füllstandsensors (3,14), dem jeweils ein unidirektional arbeitendes Kurzstrecken-Funkmodul zugeordnet wird, erfaßt werden und daß die Füllstandsdaten von den einzelnen Wertstoff-Sammelbehältern (1) an einen die Master-Funktion ausübenden Wertstoff-Sammelbehälter (4), dem ein Funk-Modem (5) zugeordnet wird, in einem definierten Zeitintervall übertragen werden, und daß der die Master-Funktion ausübende Wertstoff-sammelbehälter (4) die Füllstandsdaten der einzelnen Wertstoff-Sammelbehälter (1) in einem definierten Zeitintervall über eine Funkzentrale (7) an eine Einsatzzentrale (8) zur weiteren Verarbeitung sendet.

2. Verfahren nach Anspruch 1, dadurch gekennzeichnet, daß die Kurzstrecken-Datenübertragung von den einzelnen Wertstoff-Sammelbehältern (1) zu einer lokalen Überwachungseinheit (6,19) erfolgt, die eine Steuerungselektronik und eine Solar-Energieversorgung (18) aufweist und von der die Datenübertragung zur Zentrale (8) über ein Funkmodem (17) erfolgt, wobei im Mast (16) eine Antenne zum Empfang der Füllstandsdaten von den Wertstoff-Sammelbehältern (1) und für das Senden der aufbereiteten Daten zur Einsatzzentrale (8) vorgesehen ist.

3. Verfahren nach Anspruch 2, dadurch gekennzeichnet, daß von der lokalen Überwachungseinheit (19) eine Infrarot-Datenübertragung (21) zu in der Nähe befindlichen Einsatzfahrzeugen (22) erfolgt.

4. Verfahren nach Anspruch 1 oder 2, dadurch gekennzeichnet, daß die Meß- und Sendeelektronik (3,5,6,17,19) der Wertstoff-Sammelbehälter (1,4) für eine geringe Leistungsaufnahme ausgelegt sind.

5. Verfahren nach den Ansprüchen 1 und 2, dadurch gekennzeichnet, daß der Füllstandsensor (3,14) durch ein elektronisches Ultraschall-Meßsystem mit einer Steuer- und Speichereinheit gebildet wird.

6. Verfahren nach den Ansprüchen 1 und 2, dadurch gekennzeichnet, daß der Füllstand der Wertstoff-Sammelbehälter (1) mittels im Inneren angebrachter Lichtschranken (10,11) unabhängig vom spezifischen Gewicht des Füllgutes (3) ermittelt wird.

7. Verfahren nach den Ansprüchen 1 und 2, dadurch gekennzeichnet, daß der Füllstand der Wertstoff-Sammelbehälter (1) über die Anzahl der Einwürfe mittels an den Einfüllöffnungen (2) angebrachter Lichtschranken (12) ermittelt wird.

8. Verfahren nach den Ansprüchen 1 und 2, dadurch gekennzeichnet, daß der Füllstand der Wertstoff-Sammelbehälter (1) über die Anzahl der Einwürfe mittels einer akustischen Zähleinrichtung (14) ermittelt wird.

9. Verfahren nach Anspruch 8, dadurch gekennzeichnet, daß die akustische Zähleinrichtung (14) aus einem elektronischen Ultraschall-Meßsystem mit Sender und Empfänger und einer Steuer- und Speichereinheit gebildet wird.

10. Verfahren nach Anspruch 8, dadurch gekennzeichnet, daß die akustische Zähleinrichtung (14) ein Mikrofon enthält.

11. Verfahren nach den Ansprüchen 1 oder 2, dadurch gekennzeichnet, daß die Füllstände der Wertstoff-Sammelbehälter (1) über das Füllgewicht bestimmt werden, wobei eine Kodiereinrichtung zur automatischen Kalibrierung und Anpassung einer Gewichtsmeßeinrichtung (25) an unterschiedliche Behälterbauformen in dem Untergestell (24) des Sammelbehälters (1) angeordnet wird.

12. Verfahren nach den Ansprüchen 1 oder 2, dadurch gekennzeichnet, daß die Füllstände über eine Druckfolie (28) an der Innenwandung der Wertstoff-Sammelbehälter (1,4) erfolgt.

13. Verfahren nach den Ansprüchen 1 bis 12, dadurch gekennzeichnet, daß die erfaßten Füllstandsdaten in bestimmten Intervallen von der Zentrale (8) abgefragt werden.

14. Verfahren nach den Ansprüchen 1 bis 13, dadurch gekennzeichnet, daß die Energieversorgung durch Batterien bzw. Akkumulatoren für mindestens ein Jahr für die Master-Wertstoff-Sammelbehälter (4) und für mindestens drei Jahre für die Slave-Wertstoff-Sammelbehälter (1) sichergestellt werden.

15. Verfahren nach den Ansprüchen 1 bis 14, dadurch gekennzeichnet, daß die Energieversorgung mittels Solarenergie erfolgt.

16. Verfahren nach den Ansprüchen 1 oder 2, dadurch gekennzeichnet, daß in der Meß- und Sendeelektronik (3,5,6,17,19) eine Funkuhr installiert wird.

17. Verfahren nach den Ansprüchen 1 oder 2, dadurch gekennzeichnet, daß die Füllstände in den Wertstoff-Sammelbehältern (1) stündlich erfaßt und an den die Masterfunktion ausübenden Wertstoff-Sammelbehälter (4) oder an die lokale Überwachungseinheit (19) übertragen werden und daß dieser/diese einmal täglich die Füllstandsdaten als Block an die Zentrale (8) überträgt.

18. Verfahren nach den Ansprüchen 1 oder 2 und 17, dadurch gekennzeichnet, daß jedem Wertstoff-Sammelbehälter (1) eine feste Sendezeit für die Kurzstrecken-Datenübertragung zugeordnet wird.

## Claims

1. Procedure for monitoring the filling levels of recycling containers,
**characterised by** the following features,
the filling levels of the recycling containers (1) are registered by an electronic filling level sensor (3,14), which is allocated a uni-directional, short-distance radio module, and the filling level data is transmitted from the individual recycling containers (1) to a recycling container with a master function (4), with a radio modem (5), at a regular interval. The recycling container with the master function (4) transmits the filling level data of the individual recycling containers (1) to operation control (8) via a radio station (7) for further processing, at a defined time interval.

2. Procedure according to claim No. 1 is characterised by the following features, the short-distance data transmission is conducted from the individual recycling containers (1) to a local monitoring unit (6,19), which is fitted with control electronics and a solar power supply (18) and from which the data transmission to operation control (8) is carried out via a radio modem (17). The mast (16) contains an antenna for the reception of the filling level data from the recycling containers (1) and the transmission of the processed data to operation control (8).

3. Procedure according to claim No. 2 is characterised by the following features, the local monitoring unit (19) conducts the infrared data transmission (21) to operational vehicles nearby (22).

4. Procedure according to claims No. 1 or 2 is characterised by the following features, the measuring and transmitting electronics (3,5,6,17,19) of the recycling container (1,4) are dimensioned for a low power consumption.

5. Procedure according to claims No. 1 and 2 is characterised by the following features, the filling level sensor (3,14) is formed by an electronic ultrasonic measuring system with a controlling and storing unit.

6. Procedure according to claims No. 1 and 2 is characterised by the following features, the filling level of the recycling container (1) is established with the help of light barriers (10,11) fixed to the inside, regardless of the specific weight of the matter being stored (3).

7. Procedure according to claims No. 1 and 2 is characterised by the following features, the filling level of the recycling container (1) is established with the help of light barriers (12), counting the number of entries through the input openings (2).

8. Procedure according to claims No. 1 and 2 is characterised by the following features, the filling level of the recycling containers (1) is established with an acoustic counting system (14), which registers the number of entries.

9. Procedure according to claim No. 8 is characterised by the following features, the acoustic counting system (14) is made up of an electronic ultrasonic measuring system with a transmitter and a receiver as well as a controlling and storing unit.

10. Procedure according to claim No. 8 is characterised by the following features, the acoustic counting device (14) is fitted with a microphone.

11. Procedure according to claims No. 1 and 2 is characterised by the following features, the filling levels of the recycling containers (1) are established with the help of the filling weight, whereby a coding unit for automatic calibration and adjustment of the weight measuring device (25) is positioned in the lower frame (24) of the container (1) of varying types.

12. Procedure according to claims No. 1 and 2 is characterised by the following features, the filling levels are established with the help of a pressure foil (28) at the interior walls of the recycling container (1,4).

13. Procedure according to claims No 1 to 12 is characterised by the following features, the registered filling level data is queried by operation control (8) at certain intervals.

14. Procedure according to claims No 1 to 13 is characterised by the following features, the power supply of the master recycling container (4) is secured for at least one year with the help of batteries or accumulators and for at least three years in the case of the slave recycling containers (1).

15. Procedure according to claims 1 to 14 is characterised by the following features, the power supply is secured through solar energy.

16. Procedure according to claims 1 and 2 is characterised by the following features, a radio clock is installed into the measuring and transmitting electronics (3,5,6,17,19).

17. Procedure according to claims 1 or 2 is characterised by the following features, the filling levels of the recycling containers (1) are registered hourly and are transmitted to the recycling container with the master function (4) or to a local monitoring unit (19) which transmit(s) the filling level data to operation control (8) in a block format.

18. Procedure according to claims 1 or 2 and 17 is characterised by the following features, every recycling container (1) is allocated a fixed transmission time for the short-distance data transmission.

## Revendications

1. Procédé destiné à surveiller les niveaux de collecteurs de matières recyclables, ledit procédé étant caractérisé par le fait que les niveaux des collecteurs de matières recyclables (1) sont détectés par un capteur de niveau électronique (3, 14) auquel est respectivement affecté un module radio de faible portée à fonctionnement unidirectionnel, et par le fait que les données concernant les niveaux des différents collecteurs de matières recyclables (1) sont transmises à intervalles définis à un collecteur de matières recyclables ayant la fonction de collecteur principal (4) auquel est affecté un modem radio (5), et par le fait que le collecteur de matières recyclables ayant la fonction de collecteur principal (4) émet à intervalles définis les données concernant les niveaux des différents collecteurs de matières recyclables (1) à une centrale opérationnelle (8) par le biais d'une centrale hertzienne (7) pour leur traitement ultérieur.

2. Procédé selon revendication 1, ledit procédé étant caractérisé par le fait que la transmission de données sur de petites distances s'effectue depuis les différents collecteurs de matières recyclables (1) vers une unité de surveillance locale (6,19) qui présente un dispositif électronique de commande et une alimentation en énergie solaire (18) à partir de laquelle la transmission de données à la centrale (8) s'effectue par le biais d'un modem radio (17), une antenne pour la réception des données concernant les niveaux des collecteurs de matières recyclables (1) et pour l'émission des données préparées à la centrale opérationnelle (8) étant prévue dans le mât (16).

3. Procédé selon revendication 2, ledit procédé étant caractérisé par le fait que les données sont transmises par rayons infrarouges (21) de l'unité de surveillance locale (19) aux véhicules opérationnels (22) se trouvant à proximité.

4. Procédé selon revendication 1 ou 2, ledit procédé étant caractérisé par le fait que le dispositif électronique de mesure et d'émission (3, 5, 6, 17, 19) des collecteurs de matières recyclables (1, 4) sont conçus pour une puissance absorbée réduite.

5. Procédé selon revendications 1 et 2, ledit procédé étant caractérisé par le fait que le capteur de niveau (3, 14) est un système de mesure électronique aux ultrasons avec une unité de commande et d'enregistrement.

6. Procédé selon revendications 1 et 2, ledit procédé étant caractérisé par le fait que le niveau des collecteurs de matières recyclables (1) est détecté indépendamment du poids spécifique des charges (3) par des barrages photoélectriques placés à l'intérieur (10,11).

7. Procédé selon revendications 1 et 2, ledit procédé étant caractérisé par le fait que le niveau des collecteurs de matières recyclables (1) est détecté en fonction du nombre de remplissages par des barrages photoélectriques (12) placés sur les orifices de remplissage (2).

8. Procédé selon revendications 1 et 2, ledit procédé étant caractérisé par le fait que le niveau des collecteurs de matières recyclables (1) est détecté en fonction du nombre de remplissages par un compteur acoustique (14).

9. Procédé selon revendication 8, ledit procédé étant caractérisé par le fait que le compteur acoustique (14) est composé d'un système de mesure électronique aux ultrasons comportant un émetteur et un récepteur et d'une unité de commande et d'enregistrement.

10. Procédé selon revendication 8, ledit procédé étant caractérisé par le fait que le compteur acoustique (14) comporte un microphone.

11. Procédé selon revendication 1 ou 2, ledit procédé étant caractérisé par le fait que les niveaux des collecteurs de matières recyclables (1) sont déterminés en fonction du poids de remplissage, un dispositif de codage pour le calibrage et l'adaptation d'un dispositif de mesure des poids (25) étant placé sur la base du collecteur (1) de collecteurs de constructions différentes (24).

12. Procédé selon revendication 1 ou 2, ledit procédé étant caractérisé par le fait que les niveaux sont détectés par un film comprimé (28) placé sur la paroi intérieure des collecteurs de matières recyclables (1,4).

13. Procédé selon revendications 1 à 12, ledit procédé étant caractérisé par le fait que les données détectées concernant les niveaux sont lues à certains intervalles par la centrale (8).

14. Procédé selon revendications 1 à 13, ledit procédé étant caractérisé par le fait que l'alimentation en énergie des collecteurs de matières recyclables principaux (4) est assurée pendant au moins un an et celle des collecteurs de matières recyclables auxiliaires (1) pendant au moins trois ans par des batteries ou accumulateurs.

15. Procédé selon revendications 1 à 14, ledit procédé étant caractérisé par le fait que l'alimentation en énergie s'effectue par énergie solaire.

16. Procédé selon revendication 1 ou 2, ledit procédé étant caractérisé par le fait qu'une horloge hertzienne est installée dans le dispositif électronique de mesure et d'émission (3, 5, 6, 17, 19) .

17. Procédé selon revendication 1 ou 2, ledit procédé étant caractérisé par le fait que les niveaux des collecteurs de matières recyclable (1) sont détectés une fois par heure et transmis au collecteur de matières recyclables ayant la fonction de collecteur principal (4) ou à l'unité de surveillance locale (19) et que ce dernier/cette dernière transmet en bloc une fois par jour les données concernant les niveaux à la centrale (8).

18. Procédé selon revendications 1 ou 2 et 17, ledit procédé étant caractérisé par le fait qu'une heure d'émission fixe est affectée à chaque collecteur de matières recyclables (1) pour la transmission des données sur de petites distances.
